# FASCICULE DE BREVET EUROPEEN

(11) **EP 4 136 740 B1**
(45) Date de publication et mention de la délivrance du brevet: **25.06.2025**
(21) Numéro de dépôt: 21717055.4
(22) Date de dépôt: 06.04.2021
(51) Int. Cl.: H02K 9/19, H02K 9/20, H02K 11/25

(54) **SYSTÈME DE REFROIDISSEMENT À HUILE D'UNE MACHINE ÉLECTRIQUE**
ÖLKÜHLSYSTEM FÜR EINEN ELEKTROMOTOR
SYSTEM FOR OIL COOLING AN ELECTRIC MOTOR

(30) Priorité: 16.04.2020 FR 2003828
(43) Date de publication de la demande: 22.02.2023
(73) Titulaire: Ampere SAS, 92100 Boulogne-Billancourt (FR); NISSAN MOTOR Co., Ltd., Yokohama-shi, Kanagawa 221-0023 (JP)
(72) Inventeur: ASSAAD, Bassel, 78200 Saint Cyr l'école (FR); NEGRE, Edouard, 78180 Montigny-le-Bretonneux (FR)
(74) Mandataire: Renault Group
(86) Numéro de dépôt international: PCT/EP2021/058951
(87) Numéro de publication internationale: WO 2021/209285

(56) Documents cités:
- EP-A1- 1 841 046
- EP-A1- 2 213 497
- EP-B1- 2 213 497
- DE-C1- 19 824 202
- JP-A- 2014 030 296
- JP-A- 2016 201 959
- US-A1- 2008 047 799
- US-A1- 2011 084 561
- US-A1- 2019 173 359

## Description

L'invention concerne les systèmes de refroidissement des moteurs électriques des véhicules et, plus précisément, un système de refroidissement et de lubrification d'une machine électrique utilisée dans un véhicule automobile.

Les machines électriques comportent généralement un stator et un rotor disposés coaxialement l'un dans l'autre. Le rotor est formé d'un corps de rotor portant des générateurs de flux magnétique, tels que des aimants permanents ou des bobinages. Ce rotor est généralement logé à l'intérieur du stator qui porte des générateurs de flux magnétique sous la forme de bobinages pour générer un champ magnétique permettant d'entraîner en rotation le rotor en association avec le champ magnétique généré par les aimants ou les bobinages du rotor.

Le refroidissement des bobinages d'une machine électrique joue un rôle essentiel car, parmi les pertes de rendement d'une machine électrique, une part importante est prise par les pertes Joule qui sont proportionnelles à la température du fil des bobinages.

Des systèmes de refroidissement de machines électriques par circulation d'un liquide de refroidissement de type huile, sur les parties actives de ces machines électriques, notamment leurs bobinages, sont connus, voir par example DE19824202C1, JP2016201959A, US2008/047799A1, US2011/084561A1, EP1841046A1, US2019/173359A1, JP2014030296A and EP2213497A1. En particulier, le document DE 198 24 202 C1 divulgue une machine électrique dotée d'un circuit de refroidissement comprenant un radiateur et une pompe, qui aspire le fluide de refroidissement depuis le bas du moteur, le fait passer par un radiateur et le presse à travers des injecteurs afin de refroidir la machine.

Le document de brevet WO2018/206890 fait ainsi connaître un tel système comportant principalement un circuit de circulation d'huile apte à mettre en contact l'huile avec les parties actives de la machine électrique, via des injecteurs permettant d'arroser en huile les parties actives, un réservoir apte à collecter l'huile ayant refroidi ces parties actives, une pompe, permettant de réinjecter l'huile du réservoir vers le circuit de circulation et un échangeur de chaleur, permettant de maintenir la température de l'huile en dessous d'un seuil de température. Cet agencement permet de garantir à la fois la lubrification des pièces tournantes de la machine (joints dynamiques et roulements) et le refroidissement des parties actives de la machine (rotor et stator) de telle sorte que celle-ci ne surchauffe pas.

Un tel système de refroidissement est généralement onéreux notamment en raison de la présence de la pompe, celle-ci étant une pompe électrique et non pas une pompe mécanique, du fait qu'à faible régime et à forte demande de couple, le refroidissement de la machine devra être maximal.

Cette pompe est dimensionnée par rapport aux exigences du système. Dans le cas d'une machine électrique étanche, les joints et les roulements doivent être lubrifiés en permanence. Autrement dit, à des fins de lubrification, il est nécessaire de maintenir la pompe en fonctionnement afin d'assurer un débit minimum d'huile en permanence, quelles que soient les conditions et, en particulier, quelle que soit la température de l'huile. Ainsi, à froid, sur des plages de températures d'huile négatives et au-dessous d'un certain seuil, aucun refroidissement n'est requis et la circulation d'huile assurée par la pompe du circuit sert uniquement à lubrifier les joints et les roulements de la machine.

Or, le dimensionnement de la pompe dépend de la viscosité d'huile. Cette viscosité est très grande à des températures négatives et décroit rapidement pour converger à de faibles viscosités à partir d'un seuil de température. A froid, les grandes viscosités d'huile imposent une pression importante dans le circuit, ce qui nécessite une demande de couple plus importante à la pompe et, en conséquence, un surdimensionnement de la pompe, au détriment du coût.

Un autre problème réside dans le bruit émis par la pompe, en particulier à faible régime moteur, par exemple durant des manœuvres dans un parking ou dans des embouteillages d'une montée de col. Dans ces conditions, le bruit émis par la pompe est plus important que le bruit émis par le moteur électrique, ce qui n'est évidemment pas souhaitable.

On connaît par ailleurs des systèmes de refroidissement par barbotage du rotor lors de son fonctionnement, où les parties actives de la machine sont refroidies et les joints et roulements sont lubrifiés par l'huile projetée par le rotor lorsque celui-ci tourne. Le régime de rotation de la machine est toutefois ici un facteur limitant du bon fonctionnement de la machine. En effet, l'augmentation du régime de rotation, à partir d'un certain régime de fonctionnement, augmente significativement les pertes par frottement dues à l'huile dans l'entrefer et sur les surfaces du rotor. Autrement dit, ce système ne permet d'opérer efficacement que sur un intervalle de variation du régime de rotation du moteur relativement limité, sauf à dégrader le rendement de la machine.

Aussi, il existe un besoin pour un système de refroidissement d'une machine électrique, en particulier d'une machine électrique de traction d'un véhicule électrique ou hybride, qui soit exempt au moins en partie des limitations précédemment évoquées.

A cette fin, l'invention concerne un système de refroidissement d'une machine électrique comportant un rotor comportant un arbre tournant et un stator fixe sur une paroi interne d'un carter de la machine et entourant ledit rotor, le carter comprenant au moins un logement de palier recevant une extrémité dudit arbre tournant par l'intermédiaire d'un roulement, ledit système comprenant :
- un circuit de circulation apte à mettre en contact un liquide de refroidissement avec des parties actives de la machine électrique,
- un réservoir principal situé en partie inférieure du carter apte à réserver le liquide de refroidissement,
- une pompe reliée audit réservoir principal apte à injecter ledit liquide de refroidissement dans ledit circuit de circulation,
ledit système étant caractérisé en ce que le volume de liquide dudit réservoir principal atteint à l'arrêt un niveau de liquide de refroidissement dans le carter interfaçant une partie inférieure dudit rotor, ledit circuit de circulation menant à un réservoir secondaire situé en partie supérieure du carter, ledit système comprenant des moyens de contrôle de la pompe en fonction d'au moins la température du liquide de refroidissement, lesdits moyens de contrôle étant adaptés pour d'une part, maintenir la pompe à l'arrêt lorsque la température du liquide de refroidissement est inférieure à un seuil donné, de sorte que ledit liquide de refroidissement est projeté dans le carter par barbotage du rotor et accumulé dans un réceptacle rapporté sur la surface du carter côté dudit logement de palier apte à guider ledit liquide vers ledit logement de palier pour lubrifier et refroidir ledit roulement et, d'autre part, commander le démarrage de la pompe dès que la température du liquide de refroidissement atteint ledit seuil, de sorte que le liquide est aspiré par la pompe du réservoir principal dans ledit circuit de circulation et vers ledit réservoir secondaire, abaissant le niveau de liquide de refroidissement dans le carter.

Ainsi, grâce à cet agencement, lorsque la température du liquide de refroidissement, typiquement de l'huile, est inférieure au seuil donné, adapté pour correspondre à un fonctionnement à froid où la viscosité de l'huile est importante, soit par exemple un seuil de 0°C, le refroidissement du rotor et du sta tor ainsi que la lubrification de la machine sont assurés par le seul barbotage du rotor, qui permet de projeter l'huile dans le carter, en particulier dans le réceptacle adapté pour guider l'huile vers le logement de palier et ce, sans utilisation de la pompe. Cette dernière n'a donc pas besoin d'être dimensionnée pour répondre à des exigences élevées en termes de viscosité de l'huile, puisqu'elle n'est pas sollicitée lors des phases de fonctionnement à froid où il existe un besoin de lubrification ou de refroidissement. La puissance demandée et le couple maximal demandé à la pompe peuvent ainsi être réduits, la pompe étant uniquement sollicitée à des températures d'huile supérieures au seuil prédéfini, impliquant une faible viscosité de l'huile.

Ainsi, dès lors que la température de l'huile atteint le seuil prédéfini, principalement pour des températures positives, le démarrage de la pompe est commandé et l'huile est ainsi amenée dans le circuit de circulation qui va assurer le remplissage du réservoir secondaire, tandis que le niveau d'huile dans le carter va baisser simultanément, de sorte que le contact entre la partie inférieure du rotor et l'huile sera limité, ce qui est particulièrement favorable au fonctionnement de la machine électrique pour des régimes de rotation élevés du fait de la réduction significative des pertes de charge par frottements dus à l'huile, qui en découle. Le refroidissement et la lubrification sont alors assurés essentiellement par la mise en circulation de l'huile par la pompe dans le circuit de circulation prévu pour arroser les parties actives de la machine. Ce mode de refroidissement n'est pas limité par le régime de rotation du moteur, ce qui permet d'étendre le régime de fonctionnement de la machine et ce, sans impact sur son rendement, par opposition au mode de refroidissement et de lubrification par le seul barbotage du rotor.

Autrement dit, la sélection permise par le système de l'invention, en fonction de la température de l'huile, entre un mode de refroidissement et de lubrification avec pompe à l'arrêt, par le seul barbotage du rotor dans l'huile, et un mode de refroidissement et de lubrification avec pompe démarrée, par essentiellement projection d'huile sur les parties de la machine à refroidir et lubrifier, à travers le circuit de circulation et le réservoir secondaire, permet avantageusement de prévoir un dimensionnement optimal de la pompe, tout en augmentant le régime de fonctionnement de la machine, sans impact sur son rendement, principalement à des températures positives.

Avantageusement, ledit réservoir secondaire comporte au moins une évacuation disposée en périphérie du stator, pourvue d'un ajutage à débit modulable apte à arroser en liquide de refroidissement une portion de la surface externe longitudinale dudit stator.

Avantageusement, ledit réservoir secondaire comporte deux évacuations situées à l'opposé l'une de l'autre ou une évacuation arrosant une partie périphérique centrale dudit stator.

Avantageusement, ledit circuit de circulation comporte des ajutages à débit modulable disposés dans le carter de façon à arroser des têtes de bobine du rotor et ledit logement de palier.

Avantageusement, lesdits moyens de contrôle sont adaptés pour commander le débit de la pompe en fonction du niveau d'huile dans le carter.

Avantageusement, lesdits moyens de contrôle sont adaptés pour commander le débit de la pompe en fonction de la température des parties actives de la machine.

Avantageusement, lesdits moyens de contrôle sont adaptés pour commander le débit de la pompe en fonction du besoin en lubrification de la machine.

Avantageusement, lesdits moyens de contrôle sont adaptés pour au moins limiter le régime de la pompe, voire pour l'arrêter, lorsque le bruit émis par la pompe est supérieur au bruit émis par ladite machine électrique.

Avantageusement, ledit réceptacle est adapté pour épouser une portion angulaire supérieure du logement de palier sur laquelle il est disposé et pour communiquer, par l'intermédiaire d'un canal traversant cette portion angulaire supérieure du logement de palier, avec un espace situé entre le roulement et un joint dynamique prolongeant la paroi de carter pour étanchéifier la machine au niveau de la sortie de l'arbre tournant.

L'invention concerne également un véhicule automobile électrique ou hybride comprenant une machine électrique de traction et un système de refroidissement de la dite machine tel que décrit ci-dessus.

D'autres caractéristiques et avantages de l'invention ressortiront clairement de la description qui en est faite ci-après, à titre indicatif et nullement limitatif, en référence aux dessins annexés sur lesquels :
[Fig. 1] représente schématiquement en coupe longitudinale une machine électrique refroidie par le système de refroidissement selon l'invention ;
[Fig. 2] représente schématiquement le fonctionnement des moyens de contrôle associés à la pompe.

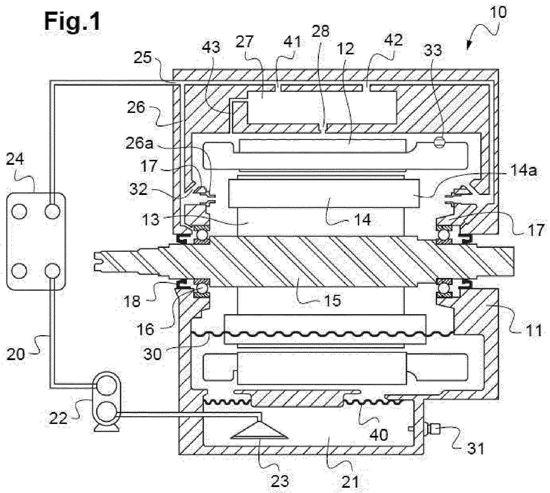

Selon le mode de réalisation de l'invention représenté à la figure 1, le système de refroidissement selon l'invention est prévu pour refroidir une machine électrique 10, en particulier une machine électrique de traction d'un véhicule électrique ou hybride. Cette machine électrique 10 comporte un carter 11, dans lequel est fixé un stator 12, constitué principalement d'un empilement de tôles magnétiques et de bobinages en cuivre insérés dans des encoches de l'empilement de tôles. Dans le stator 12 et logé un rotor 13, constitué selon ce mode de réalisation de l'invention, d'un empilement de tôles magnétiques formant des pôles magnétiques saillants autour desquels sont bobinés des bobinages 14 en cuivre. Le rotor 13 est monté sur un arbre tournant 15 fixé d'une part au rotor 13 et d'autre part au carter de la machine électrique. Les extrémités de l'arbre tournant 15 sont tenues dans des roulements 16, notamment à billes, montés sur l'arbre tournant et logés dans des logements de palier 17 sensiblement cylindriques formés dans les parois verticales du carter 11. Notamment, les roulements à bille 16 sont logés dans une partie interne cylindrique des logements de palier. Un joint dynamique 18 vient fermer hermétiquement l'extrémité axiale de la machine électrique au niveau du roulement à bille 16.

Un système de refroidissement selon l'invention est utilisé pour refroidir les parties actives de la machine électrique 10, que sont le stator 12 et le rotor 13, ainsi que pour lubrifier et refroidir les joints et les roulements.

Pour cela, le système de refroidissement comporte notamment un circuit de circulation 20 permettant de mettre en contact un liquide de refroidissement, par projection de ce liquide, préférentiellement de l'huile, sur ces éléments de la machine électrique 10, l'huile étant injectée dans le circuit de circulation 20 depuis un réservoir principal 21 situé en partie inférieure du carter sous la machine, par l'intermédiaire d'une pompe 22. Un système de crépine 23 et de tuyaux amène l'huile du réservoir 21 jusqu'à la pompe 22, qui elle-même est connectée par un tuyau amenant l'huile pompée à un échangeur de chaleur 24, destiné à refroidir l'huile reçue depuis la pompe 22 avant de la réinjecter vers le circuit de circulation 20 permettant d'amener et de projeter l'huile qui a été refroidie au niveau de l'échangeur de chaleur 24, directement sur les éléments chauffants de la machine électrique. L'huile ainsi projetée récupère les calories produites par la machine et retourne ensuite dans le réservoir 21 par gravité.

Le circuit de circulation comporte pour cela une conduite en sortie de l'échangeur 24, qui amène l'huile refroidie au niveau d'une entrée 25, située sur un fond de carter de la machine électrique 10, ce fond de carter formant une paroi verticale du carter 11 de la machine électrique 10. Cette entrée 25 amène l'huile refroidie au niveau de l'échangeur jusqu'à un passage 26 ménagé dans le fond de carter et menant d'une part, à un ajutage situé en vis-à-vis du roulement 16 de l'arbre tournant 15 de la machine électrique 10 et, d'autre part, à un ajutage 26a situé en vis-à-vis des têtes de bobines 14a du rotor. Ces ajutages sont préférentiellement à débit modulable. L'entrée 25 amène également l'huile refroidie au niveau de l'échangeur des entrées 41 et 42 supérieures d'un réservoir secondaire 27 situé en partie supérieure du carter, en haut de la machine électrique. Ce réservoir secondaire 27 s'étend sur sensiblement toute la longueur du stator, en périphérie de celui-ci. Il est destiné à se remplir d'huile et comporte sur sa partie inférieure une évacuation centrale 28 disposée en périphérie du stator, pourvue d'un ajutage, préférentiellement à débit modulable, permettant d'arroser d'huile une portion centrale de la surface externe longitudinale du stator 12. En variante, le réservoir 27 peut comprendre deux évacuations disposées à l'opposé l'une de l'autre, préférentiellement sensiblement au niveau des extrémités longitudinales respectives du réservoir secondaire 27. De préférence, le réservoir 27 comporte une sortie supplémentaire 43 de trop plein pour éviter le remplissage total du réservoir.

L'huile issue des ajutages de refroidissement disposés en regard des têtes de bobine du rotor 14a et de la périphérie du stator ayant refroidie le stator et le rotor, descend par gravité dans le réservoir principal d'huile 21. En parallèle, l'huile issue des ajutages de lubrification disposés en regard des roulements 16 descend également par gravité dans le réservoir d'huile. Le débit des ajutages de lubrification est préférentiellement réglé de manière à ce qu'il soit plus faible que le débit des ajutages de refroidissement.

De plus, conformément à l'invention, le volume de liquide du réservoir principal 21 est adapté de façon que le niveau d'huile dans le carter atteigne à l'arrêt de la pompe un niveau 30 interfaçant une partie inférieure du rotor. Comme illustré à la figure 1, le niveau d'huile 30 dans la partie inférieure de la machine électrique 10 est situé au niveau du bobinage inférieur du rotor 13. Ainsi, la partie inférieure du rotor baigne dans l'huile.

Avantageusement, la température de l'huile est mesurée par un capteur de température 31, installé dans le réservoir principal 21.

On va maintenant décrire un premier mode de refroidissement, dit à froid, lorsque la température de l'huile mesurée par le capteur 31 est inférieure à un seuil de température prédéfini. Ce seuil permet avantageusement de définir les températures pour lesquelles le niveau de viscosité de l'huile est tel qu'il nécessiterait une demande de couple important à la pompe pour faire circuler l'huile dans le circuit. Ce seuil est par exemple préférentiellement fixé à 0°C , la viscosité de l'huile étant très grande à des températures négatives. Aussi, pour éviter d'avoir à dimensionner la pompe en conséquence, lorsque la température de l'huile mesurée par le capteur 31 est inférieure à un seuil de température prédéfini, la pompe est commandée à l'arrêt. Le niveau d'huile dans le carter étant situé au niveau 30 comme illustré à la figure 1, de sorte que la partie inférieure du rotor baigne dans l'huile, lorsque la machine est en fonctionnement, du fait de la rotation du rotor couplé à l'arbre tournant, l'huile sera projetée dans le carter par barbotage du rotor. Plus précisément, le mouvement de rotation du rotor baignant dans l'huile amène l'huile sur toute la surface cylindrique du rotor, ce qui permet de refroidir les bobinages du rotor. L'huile est de plus projetée par le rotor sur la surface interne cylindrique du stator, refroidissant ainsi les bobinages du stator. Une partie de l'huile projetée est en outre accumulée dans un réceptacle 32, rapporté sur la surface du carter côté du logement de palier 17. ce réceptacle est prévu pour guider l'huile ainsi récupérée vers le logement de palier pour lubrifier et refroidir le joint et le roulement qui y sont montés. Le réceptacle est par exemple clipsé ou vissé sur la surface du carter côté du logement de palier. Plus précisément, le réceptacle 32 est adapté pour épouser une portion angulaire supérieure du logement de palier sur laquelle il est disposé et pour communiquer, par l'intermédiaire d'un canal traversant cette portion angulaire supérieure du logement de palier, avec un espace situé entre le roulement et le joint dynamique qui prolonge la paroi de carter pour étanchéifier la machine au niveau de la sortie de l'arbre tournant. L'huile vient ainsi lubrifier efficacement le roulement à billes ainsi que le joint dynamique. Un évidement est aussi prévu pour que l'huile s'écoulant entre le joint dynamique et le roulement à billes, ne remplisse pas complètement le logement de joint et puisse se déverser dans la partie inférieure du carter.

Ainsi, dans ce mode de refroidissement à froid, les parties actives de la machine sont seulement refroidies par l'huile projetée par le rotor lorsque celui-ci tourne et les roulements de la machine sont lubrifiés également par l'huile projetée par le rotor lors de son fonctionnement. La pompe 22 du circuit de circulation d'huile 20 est ici à l'arrêt et n'est donc pas sollicitée dans ce mode de refroidissement à froid où la viscosité de l'huile est grande, ce qui permet avantageusement un dimensionnement plus petit de la pompe, par la réduction de la puissance requise pour celle-ci et partant, un coût moindre de la pompe au bénéfice de la compétitivité de la machine électrique refroidie par le système de l'invention.

Par contre, dès que la température de l'huile atteint le seuil prédéfini, par exemple 0°C, à partir duquel la viscosité de l'huile conver ge rapidement à de faibles valeurs, un deuxième mode de refroidissement, dit à chaud, est mis en œuvre, dans lequel la pompe 22 est démarrée. Le démarrage de la pompe 22 est donc avantageusement contrôlé par la température de l'huile mesurée par le capteur de température 31. La pompe 22 étant activée, l'huile est alors amenée dans le circuit de circulation 20 à travers le système de crépine 23 et l'échangeur de chaleur 24, puis d'une part, vers le passage 26 ménagé dans le fond de carter pour arroser le rotor et le roulement et, d'autre part, vers le réservoir secondaire 27 situé en partie supérieure du carter, qui va se remplir.

Avec le démarrage de la pompe 22 et le remplissage du réservoir secondaire 27, le niveau d'huile 30 dans le carter va baisser jusqu'à atteindre le nouveau niveau d'huile référencé 40 sur la figure 1, et le contact de l'huile avec le rotor est ainsi limité. Ceci permet avantageusement de réduire les pertes mécaniques par frottement dues au couple résistif généré par l'huile en contact avec le rotor et dans l'entrefer, en particulier lors de l'augmentation du régime de fonctionnement de la machine et ainsi d'améliorer le rendement de la machine, pour des températures d'huile supérieures au seuil prédéfini. On peut en particulier monter à des vitesses de rotation supérieures à 14000 tr/min, jusqu'à 16000 à 20000 tr/min, sans dégrader le rendement, grâce à la pompe qui va opérer aux températures d'huile supérieures audit seuil.

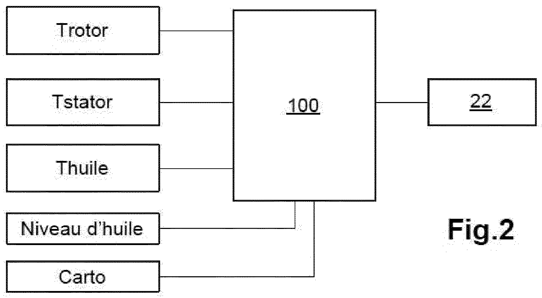

La pompe 22 pourra être contrôlée d'une manière optimisée en fonction de plusieurs critères. En référence à la figure 2, sont décrits des moyens de contrôle 100 de la pompe 22. Les moyens de contrôle 100 sont notamment adaptés pour commander l'arrêt/démarrage de la pompe, en fonction de la mesure reçue de la température d'huile Thuile, comme expliqué ci-dessus. Les moyens de contrôles 100 de la pompe sont également adaptés pour commander le débit de la pompe 22 en fonction du besoin en refroidissement de la machine, défini en fonction de la température des parties actives de la machine et tenant compte de la température d'huile. La température des parties actives de la machine est par exemple fournie par une estimation de la température du rotor Trotor et par une mesure de la température du stator Tstator, acquise par un capteur de température 33 installé au niveau du stator.

Les moyens de contrôle peuvent également être adaptés pour commander le débit de la pompe en fonction du niveau d'huile dans le carter. A cet égard, les moyens de contrôle 100 sont prévus pour assurer un débit minimal de la pompe afin de vider le réservoir d'huile principal pour atteindre un niveau d'huile propre à limiter le contact huile-rotor.

Les moyens de contrôle peuvent également être adaptés pour commander le débit de la pompe en fonction du besoin en lubrification de la machine, défini par exemple à partir d'une cartographie Carto intégrée aux moyens de contrôle, permettant de garantir un débit minimal délivré par la pompe aux fins de lubrification.

Dans le cas où le bruit émis par la pompe est supérieur au bruit émis par la machine, les moyens de contrôle 100 peuvent également être adaptés de façon à limiter le régime de la pompe, voire à l'arrêter. Afin de quantifier de manière objective le bruit émis par la machine ou la pompe en fonctionnement, on pourra utiliser différentes méthodes d'évaluation du bruit, par exemple par analyse de la puissance acoustique produite. Dans le cas où les conditions de fonctionnement impliquent un besoin en lubrification ou en refroidissement de la machine, si la pompe est arrêtée ou voit son régime limité, la machine risque normalement d'atteindre ses limites thermiques et/ou les joints ou les roulements risquent une dégradation. Cependant, dans le système selon l'invention, même si la pompe est arrêtée ou limitée pour que son bruit soit inférieur au bruit de la machine, tout défaut de lubrification ou de refroidissement est avantageusement écarté, puisque le réservoir d'huile secondaire va alors se vider pour refroidir la machine, de sorte que le niveau d'huile augmente de nouveau dans le carter au niveau 30 tel qu'illustré à la figure 1 et le rotor va baigner dans l'huile pour assurer le bon fonctionnement du refroidissement par barbotage du rotor.

## Revendications

1. Système de refroidissement d'une machine électrique (10) comportant un rotor (13) comportant un arbre tournant (15) et un stator (12) fixe sur une paroi interne d'un carter (11) de la machine et entourant ledit rotor, le carter (11) comprenant au moins un logement de palier (17) recevant une extrémité dudit arbre tournant par l'intermédiaire d'un roulement (16),
ledit système comprenant :
- un circuit de circulation (20) apte à mettre en contact un liquide de refroidissement avec des parties actives de la machine électrique,
- un réservoir principal (21) situé en partie inférieure dudit carter apte à réserver le liquide de refroidissement,
- une pompe (22) reliée audit réservoir principal apte à injecter ledit liquide de refroidissement dans ledit circuit de circulation,
ledit système étant **caractérisé en ce que** le volume de liquide dudit réservoir principal atteint à l'arrêt un niveau (30) de liquide de refroidissement dans le carter interfaçant une partie inférieure dudit rotor, ledit circuit de circulation menant à un réservoir secondaire (27) situé en partie supérieure du carter, ledit système comprenant des moyens de contrôle (100) de la pompe en fonction d'au moins la température du liquide de refroidissement (Thuile), lesdits moyens de contrôle étant adaptés pour d'une part, maintenir la pompe (22) à l'arrêt lorsque la température du liquide de refroidissement est inférieure à un seuil donné, de sorte que ledit liquide de refroidissement est projeté dans le carter par barbotage du rotor et accumulé dans un réceptacle (32) rapporté sur la surface du carter côté dudit logement de palier apte à guider ledit liquide vers ledit logement de palier pour lubrifier et refroidir ledit roulement et, d'autre part, commander le démarrage de la pompe (22) dès que la température du liquide de refroidissement atteint ledit seuil, de sorte que le liquide est aspiré par la pompe du réservoir principal dans ledit circuit de circulation et vers le réservoir secondaire, abaissant le niveau de liquide de refroidissement dans le carter.

2. Système de refroidissement selon la revendication 1, **caractérisé en ce que** ledit réservoir secondaire (27) comporte au moins une évacuation (28, 29) disposée en périphérie du stator, pourvue d'un ajutage à débit modulable apte à arroser en liquide de refroidissement une portion de la surface externe longitudinale dudit stator.

3. Système selon la revendication 2, **caractérisé en ce que** ledit réservoir secondaire comporte deux évacuations situées à l'opposé l'une de l'autre ou une évacuation arrosant une partie périphérique centrale dudit stator.

4. Système selon l'une quelconque des revendications 1 à 3, **caractérisé en ce que** ledit circuit de circulation (20) comporte des ajutages à débit modulable disposés dans le carter de façon à arroser des têtes de bobine du rotor et ledit logement de palier.

5. Système selon l'une quelconque des revendications précédentes, **caractérisé en ce que** lesdits moyens de contrôle (100) sont adaptés pour commander le débit de la pompe (22) en fonction du niveau d'huile (30) dans le carter.

6. Système selon l'une quelconque des revendications précédentes, **caractérisé en ce que** lesdits moyens de contrôle (100) sont adaptés pour commander le débit de la pompe (22) en fonction de la température (Tstator, Trotor) des parties actives de la machine.

7. Système selon l'une quelconque des revendications précédentes, **caractérisé en ce que** lesdits moyens de contrôle (100) sont adaptés pour commander le débit de la pompe (22) en fonction du besoin en lubrification de la machine.

8. Système selon l'une quelconque des revendications précédentes, **caractérisé en ce que** lesdits moyens de contrôle (100) sont adaptés pour au moins limiter le régime de la pompe, voire pour l'arrêter, lorsque le bruit émis par la pompe est supérieur au bruit émis par ladite machine électrique.

9. Système selon l'une quelconque des revendications précédentes, **caractérisé en ce que** ledit réceptacle (32) est adapté pour épouser une portion angulaire supérieure du logement de palier (17) sur laquelle il est disposé et pour communiquer, par l'intermédiaire d'un canal traversant cette portion angulaire supérieure du logement de palier, avec un espace situé entre le roulement (16) et un joint dynamique (18) prolongeant la paroi de carter pour étanchéifier la machine au niveau de la sortie de l'arbre tournant (15).

10. Véhicule automobile électrique ou hybride comprenant une machine électrique de traction et un système de refroidissement de la dite machine selon l'une quelconque des revendications précédentes.

## Patentansprüche

1. Kühlsystem für eine elektrische Maschine (10), umfassend einen Rotor (13), umfassend eine rotierende Welle (15) und einen Stator (12), der an einer Innenwand eines Gehäuses (11) der Maschine befestigt ist und den Rotor umgibt, wobei das Gehäuse (11) mindestens eine Wellenlageraufnahme (17) aufweist, die ein Ende der Drehwelle über ein Lager (16) aufnimmt, das System umfassend:
- einen Kreislauf (20), der eine Kühlflüssigkeit mit aktiven Teilen der elektrischen Maschine in Kontakt bringen kann,
- einen Hauptbehälter (21), der sich in dem unteren Teil des Gehäuses befindet und die Kühlflüssigkeit aufnehmen kann,
- eine Pumpe (22), die mit dem Hauptbehälter verbunden ist und die Kühlflüssigkeit in den Kreislauf einspritzen kann,
wobei das System **dadurch gekennzeichnet ist, dass** das Flüssigkeitsvolumen des Hauptbehälters im Stillstand einen Kühlflüssigkeitsstand (30) in dem Gehäuse erreicht, das an einen unteren Teil des Rotors angrenzt, wobei der Kreislauf zu einem Nebenbehälter (27) führt, der sich in dem oberen Teil des Gehäuses befindet, wobei das System Mittel (100) zur Steuerung der Pumpe in Abhängigkeit von mindestens der Temperatur der Kühlflüssigkeit (TÖl) umfasst, wobei die Mittel zur Steuerung so angepasst sind, dass sie einerseits die Pumpe (22) im Stillstand halten, wenn die Temperatur der Kühlflüssigkeit unter einen vorgegebenen Schwellenwert fällt, sodass die Kühlflüssigkeit durch Einspritzen des Rotors in das Gehäuse gespritzt und in einem Behälter (32) gesammelt wird, der an der Oberfläche des Gehäuses auf der Seite des Lagergehäuses angebracht ist, das die Flüssigkeit zu dem Gleitlagergehäuse leiten kann, um das Lager zu schmieren und zu kühlen, und zum anderen das Anlaufen der Pumpe (22) zu steuern, sobald die Temperatur der Kühlflüssigkeit den Schwellenwert erreicht, so dass die Flüssigkeit von der Pumpe aus dem Hauptbehälter in den Kreislauf und zu dem Nebenbehälter gesaugt wird, wodurch der Kühlflüssigkeitsstand in dem Gehäuse gesenkt wird.

2. Kühlsystem nach Anspruch 1, **dadurch gekennzeichnet, dass** der Nebenbehälter (27) mindestens einen an dem Umfang des Stators angeordneten Auslass (28, 29) mit einer Durchflussmenge umfasst, die so eingestellt werden kann, dass ein Teil der Längsaußenoberfläche des Stators mit Kühlflüssigkeit besprüht wird.

3. System nach Anspruch 2, **dadurch gekennzeichnet, dass** der Nebenbehälter zwei einander gegenüberliegende Auslässe oder einen Auslass umfasst, der einen mittleren Umfangsabschnitt des Stators besprüht.

4. System nach einem der Ansprüche 1 bis 3, **dadurch gekennzeichnet, dass** der Kreislauf (20) Durchflussdrosseln mit einstellbarer Durchflussmenge umfasst, die in dem Gehäuse so angeordnet sind, dass sie die Spulenköpfe des Rotors und die Wellenlageraufnahme besprühen.

5. System nach einem der vorhergehenden Ansprüche, **dadurch gekennzeichnet, dass** die Mittel zur Steuerung (100) dazu angepasst sind, den Durchfluss der Pumpe (22) in Abhängigkeit von dem Ölstand (30) in dem Gehäuse zu steuern.

6. System nach einem der vorhergehenden Ansprüche, **dadurch gekennzeichnet, dass** die Mittel zur Steuerung (100) dazu angepasst sind, den Durchfluss der Pumpe (22) in Abhängigkeit von der Temperatur (TStator, TRotor) der aktiven Teile der Maschine zu steuern.

7. System nach einem der vorhergehenden Ansprüche, **dadurch gekennzeichnet, dass** die Mittel zur Steuerung (100) dazu angepasst sind, den Durchfluss der Pumpe (22) in Abhängigkeit von dem Schmierbedarf der Maschine zu steuern.

8. System nach einem der vorhergehenden Ansprüche, **dadurch gekennzeichnet, dass** die Mittel zur Steuerung (100) dazu angepasst sind, die Drehzahl der Pumpe zumindest zu begrenzen oder sogar anzuhalten, wenn das von der Pumpe abgegebene Geräusch das von der elektrischen Maschine abgegebene Geräusch übersteigt.

9. System nach einem der vorhergehenden Ansprüche, **dadurch gekennzeichnet, dass** das Gefäß (32) so ausgelegt ist, dass es an einen oberen Winkelabschnitt der Wellenlageraufnahme (17), auf der es angeordnet ist, angepasst ist und dass es über einen Kanal, der diesen oberen Winkelabschnitt der Wellenlageraufnahme durchquert, mit einem Raum zwischen dem Lager (16) und einer dynamischen Dichtung (18) kommuniziert, die die Gehäusewand verlängert, um die Maschine an dem Ausgang der Drehwelle (15) abzudichten.

10. Elektro- oder Hybridkraftfahrzeug, aufweisend eine elektrische Antriebsmaschine und ein Kühlsystem für diese Maschine nach einem der vorhergehenden Ansprüche.

## Claims

1. System for cooling an electric machine (10) having a rotor (13) having a rotary shaft (15) and a stator (12) fixed to an internal wall of a casing (11) of the machine and surrounding said rotor, the casing (11) comprising at least one bearing housing (17) which receives an end of said rotary shaft by way of a rolling bearing (16), said system comprising:
- a circulation circuit (20) able to bring a cooling liquid into contact with active parts of the electric machine,
- a main reservoir (21) situated in a lower part of said casing, said main reservoir being able to hold the cooling liquid,
- a pump (22) connected to said main reservoir, said pump being able to inject said cooling liquid into said circulation circuit,
said system being **characterized in that** the volume of liquid in said main reservoir reaches, in the shutdown state, a level (30) of cooling liquid in the casing that interfaces with a lower part of said rotor, said circulation circuit leading to a secondary reservoir (27) situated in an upper part of the casing, said system comprising control means (100) for controlling the pump as a function of at least the temperature of the cooling liquid (Toil), said control means being designed to, for the one part, keep the pump (22) in the shutdown state when the temperature of the cooling liquid is lower than a given threshold, such that said cooling liquid is propelled into the casing by splash lubrication of the rotor and accumulated in a receptacle (32) attached to the surface of the casing on the side of said bearing housing, said receptacle being able to guide said liquid toward said bearing housing in order to lubricate and cool said rolling bearing, and to, for the other part, command the start-up of the pump (22) as soon as the temperature of the cooling liquid reaches said threshold, such that the liquid is drawn in by the pump from the main reservoir into said circulation circuit and toward the secondary reservoir, lowering the level of cooling liquid in the casing.

2. Cooling system according to Claim 1, **characterized in that** said secondary reservoir (27) has at least one discharge (28, 29) disposed at the periphery of the stator and provided with a variable flow nozzle able to spray cooling liquid onto a portion of the longitudinal external surface of said stator.

3. System according to Claim 2, **characterized in that** said secondary reservoir has two discharges situated on opposite sides from one another or one discharge spraying a central peripheral part of said stator.

4. System according to any one of Claims 1 to 3, **characterized in that** said circulation circuit (20) has variable flow nozzles disposed in the casing so as to spray winding overhangs of the rotor and said bearing housing.

5. System according to any one of the preceding claims, **characterized in that** said control means (100) are designed to control the flow rate of the pump (22) as a function of the oil level (30) in the casing.

6. System according to any one of the preceding claims, **characterized in that** said control means (100) are designed to control the flow rate of the pump (22) as a function of the temperature (Tstator, Trotor) of the active parts of the machine.

7. System according to any one of the preceding claims, **characterized in that** said control means (100) are designed to control the flow rate of the pump (22) as a function of the lubrication requirement of the machine.

8. System according to any one of the preceding claims, **characterized in that** said control means (100) are designed to at least limit the speed of the pump, or even to stop it, when the noise emitted by the pump is greater than the noise emitted by said electric machine.

9. System according to any one of the preceding claims, **characterized in that** said receptacle (32) is designed to accept an upper angular portion of the bearing housing (17) on which it is disposed and to communicate, by way of a duct passing through this upper angular portion of the bearing housing, with a space situated between the rolling bearing (16) and a dynamic seal (18) extending the casing wall so as to seal the machine at the exit point of the rotary shaft (15).

10. Electric or hybrid motor vehicle comprising an electric traction machine and a cooling system for cooling said machine according to any one of the preceding claims.
